Europäisches Patentamt

European Patent Office

Office européen des brevets

(11) Publication number: **0 107 633**
A1

# (12) EUROPEAN PATENT APPLICATION

(21) Application number: 83850271.4

(22) Date of filing: **10.10.83**

(51) Int. Cl.³: **A 47 K 11/02**, A 47 K 11/00

(30) Priority: **11.10.82 SE 8205781**

(43) Date of publication of application: **02.05.84**
**Bulletin 84/18**

(84) Designated Contracting States: **AT BE CH DE FR GB IT LI LU NL**

(71) Applicant: **Aktiebolaget Gustavsberg,
S-134 00 Gustavsberg (SE)**

(72) Inventor: **Johansson, Per-Arne, Akersbärsvägen 18,
S-139 00 Värmdö (SE)**
Inventor: **Lindholm, Rune, Ingarövägen 6,
S-134 00 Gustavsberg (SE)**

(74) Representative: **Erixon, Bo, Kooperativa Förbundet (KF)
Patent Department Box 15200, S-104 65 Stockholm (SE)**

(54) **Composting closet.**

(57) In a composting closet, the primary container (4) consists of a cradle carried in a swinging shaft underneath the toilet seat (3'). A maturing pan (17) runs in slide rails on the bottom of the closet housing (1) underneath the primary container (4). The bottom of the housing (1) underneath the maturing pan (17) is provided with a recess (24) for receiving a heating slab (25), by means of which the contents of the maturing pan (17) can be pasteurized.

EP 0 107 633 A1

ACTORUM AG

## Composting closet

The present invention pertains to a composting closet of the kind that
consists of a housing, the top of which has an openable lid, a primary
container intended to be charged with a mass suitably composed for the
biological degradation of human excrement, separate means for supplying
heat to the primary container and thereby bringing the mass to a suitable
temperature, rotatable stirring elements for intermittently setting the
mass in such motion that its aeration is promoted, a maturing pan that is
communicable with the primary container and means for ventilation of said
primary container and maturing pan.

A number of different types of composting closets are known, all of which
are based on the time-honoured principle of the traditional dry privy, but
where the process of biodegradation is accelerated by various technical
means. The object of all known designs is to produce a toilet of acceptable
volume that can be installed in or adjacent to a residential house. The
measures that are adopted to accelerate the biodegradation process normally
entail heating and stirring the waste mass.

Closets of the kind described above have the disadvantage that they leave
a product that contains hazardous concentrations of, above all, coliform
and pathogenic bacteria as well as parasite eggs. In order to eliminate
this disadvantage, it has previously been proposed that the maturing pan be housed in a section separate from the rest of the toilet (see
Swedish patent 380.252). The maturing pan is equipped with a special
heating device, which is so designed that the mass in the pan can be
heated to such a temperature that pasteurization of the mass is obtained.
The pan can then be emptied into a vegetable garden or flower bed without
risk.

The present invention pertains to a closet of the aforesaid kind, in which
the maturing pan is arranged inside the closet's housing underneath the
primary container. In order to permit transfer of waste mass from the
primary container to the maturing pan, the former is mounted on a shaft
carried in the side walls of the housing so that it can be swung from a
resting position to an emptying position. The other special features of
the invention are described in the following patent claims.

One embodiment of the invention will be described in greater detail in the
following, with reference to the accompanying figures.

Fig. 1 shows a perspective view of a closet in accordance with the invention,

Fig. 2 shows a cross section through line II-II in fig. 1 and

Fig. 3 shows a schematic section in line III-III in fig. 2.

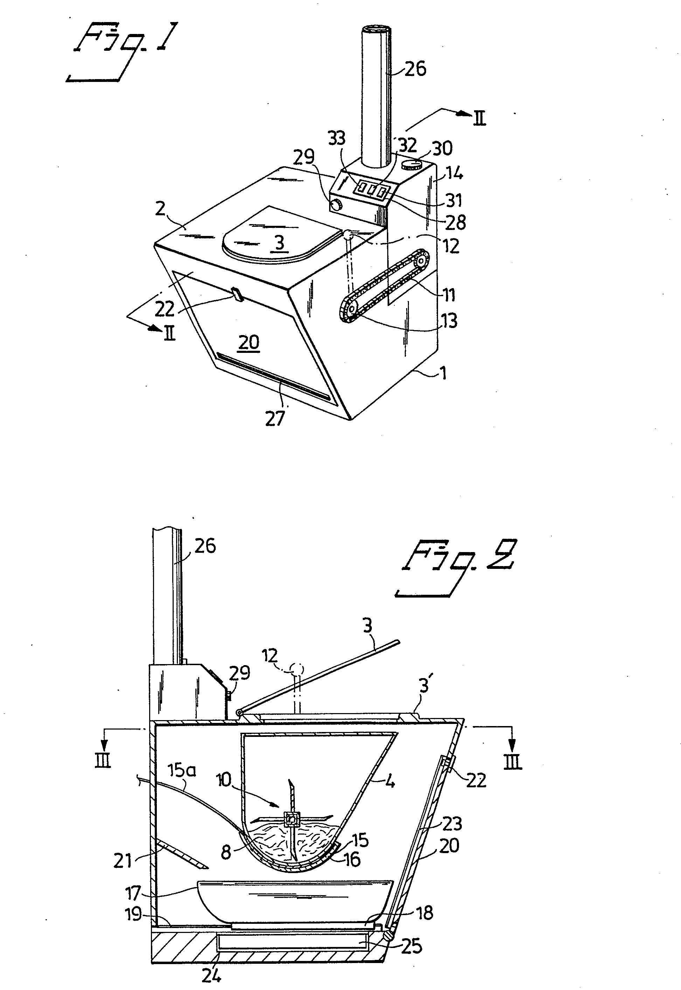

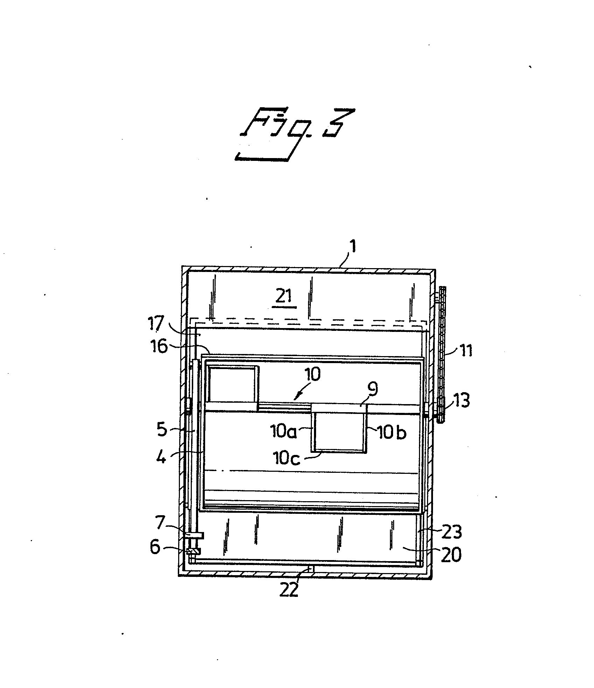

The closet in accordance with the invention consists of a housing 1, whose
top 2 is provided with a lid 3 for a toilet seat 3'. A degradation tank,
referred to in the following as the primary container 4, is arranged
inside the housing 1 and under the toilet seat 3'. The primary container 4
is pivot-mounted in the side walls of the housing 1 so that it can be
tipped for emptying. A tipping arm 5 is hinged at one end in one of the
side walls of the primary container 4 (see fig. 3). Its opposite end is
fitted with a grip 6 and runs through a slide bushing 7 attached to one
side wall of the housing. The tipping arm 5 is designed in such a manner
that it can be locked in the slide bushing 7, either in a resting position
for the primary container (fig. 2) or an emptying position.

The primary container 4 is charged prior to use of the closet with a layer of a particularly active mass 8. This mass 8 provides a favourable environment for faeces-decomposing bacteria. When the closet is used, the faeces land on top of the mass 8, while the urine is absorbed by it. After use, the lid 3 is closed, whereupon the stirring mechanism installed in the primary container 4 is brought into rotation so that the faeces are mixed with the mass 8. At the same time, the part of the mass 8 that has absorbed the urine will be effectively mixed with the rest of the mass.

The stirring mechanism (see fig. 3) consists of a rotatable shaft 9 in the form of a square tube that runs through the primary container 4, on which a number of stirring elements 10 are mounted. Each stirring element 10 consists of a pair of arms 10a, 10b projecting from the shaft 9, between whose ends a blade 10c is attached. The ends of the arms 10a, 10b intended for mounting on the shaft are provided with square holes so that they can be slipped directly over the shaft 9. The stirring elements 10 are of such a size that there is room for exactly four between the side walls of the primary container 4 when they are slipped onto the shaft. This obviates the necessity of using special retaining elements for fixing the stirring elements 10 on the shaft 9. Said stirring elements 10 are mounted on the shaft 9 at 90$^{o}$ in relation to each other, so that one blade is always in the mass 8.

The shaft 9 extends through the side walls of the primary container 4 and is provided at its ends with bushings for interaction with sleeves arranged in the side walls of the housing 1. The shaft 9 thereby also serves as a tipping shaft for the primary container 4.

The rotation of the stirring mechanism in the primary container 4 is brought about by means of a drive unit which, in the embodiment illustrated (fig. 1), consists of a drive motor which brings the shaft to rotate via a drive chain 11. In a simpler embodiment of the invention, the rotational movement can be brought about manually by means of a lever 12.

0107633

For transmission of the rotational movement to the shaft 9, a drive journal can be inserted in the side wall of the housing to connect with the shaft 9. A sprocket 13 or lever 12 is mounted on the said journal. The drive motor is enclosed in a control cassette 14, which is easily detachable from the housing 1.

In order to maintain a temperature in the mass 8 that is favourable for the faeces- and urine-decomposing micro-organisms, the primary container 4 is equipped with a heat-generating device in the form of an electric heating foil 15 arranged underneath the bottom of the container 4. The foil 15 is applied against the bottom of the container in such a manner that the heat is distributed as evenly as possible over the entire bottom. An insulating layer 16 is provided underneath the foil 15. The heating foil 15 is supplied with electricity via a cable 15a from the control cassette.

A maturing pan 17 is arranged underneath the primary container 4 in the closet housing 1. The bottom of this pan 17 is provided with two sliding elements 18, which are situated along either side of the pan and parallel to the side walls of the housing 1. The front of the housing 1 is provided with an openable door, which can be closed around hinge pins in the lower part of the housing. The door 20 is fastened in the closed position by a catch device 22. The inside of the door 20 is provided with slide rails 23 which, when the door is fully open, constitute an extension of the slide rails 19 in the housing 1. With this arrangement, the maturing pan 17 can be withdrawn from the housing 1, on the slide rails 19 and 23 when the door is in the fully open position.

The bottom of the housing is provided between the slide rails with a recess 24 designed to receive a pasteurizing slab 25 containing an electric heating foil next to the maturing pan 17, backed by an insulating layer. This heating foil is also supplied with electric current from the control cassette 14 via a cable (not shown). When the closet is equipped with such a pasteurizing slab, the contents of the maturing pan can be pasteurized so that an otherwise necessary maturing process can be avoided.

The closet is equipped with a vent pipe 26, which is attached to the control case 14 and forms a ventilation connection with the interior of the housing 1 in order to remove water vapour from the primary container 4 as well as the gases that form during the degradation process both in the primary container and in the maturing pan 17. A fan is installed in the lower part of the vent pipe 26 in order to create a current of air through the housing 1 past the container and the pan. Air intake into the housing takes place through a slot 27 in the lower part of the front door 20. The fan is sized to provide such an air change rate in the closet that the supply of oxygen is sufficient for the degradation process. A capacity of more than 100 m$^3$ of air per hour is required for this purpose. A baffle 21 is provided in the housing 1 under the vent pipe 26 to divert the condensate water to the maturing pan 17.

The control cassette 14 extends above the housing and is provided with a control panel 28 with switches for ventilation, automatic stirring and heat supply to the primary container 4. The cassette is also provided with a lid switch 29 for contact with the toilet lid 3, the function of which switch will be described in the following. A timer 30 is provided to control the supply of heat to the maturing pan 17.

For continuous use of the closet, the fan is started by closing the main power switch 31. Automatic control of the stirring mechanism's rotation is started by operating the control button 32. In this automatic control mode, the stirring mechanism is brought to rotate one minute out of every hour. The heating foil 15 is activated by operating the control button 33, provided that the automatic stirring control mode is on. In order to prevent the automatic controls from starting the stirring mechanism while the closet is in use, the lid switch 29 is arranged to be actuated by the open lid 3 so that the stirring mechanism is prevented from rotating. After use of the toilet, the stirring mechanism can be activated by operating the control button 32, whereby the automatic controls are zeroed so that the stirring elements 10 are immediately brought to rotate for one minute.

0107633

When the primary container 4 is to be emptied, the door 20 is opened and dropped down so that it rests on the catch device 22 against the underlying surface. The maturing pan 17 is then withdrawn on the slide rails 19, 23 to a suitable position for reception of the mass 8 from the primary container. The latter is tipped by pulling out the tipping arm 5 and locking it in the bushing 7 in the tipping position. Emptying of the primary container is facilitated by starting up the stirring elements 10. After the primary container 4 has been emptied to the desired extent, it is returned to its resting position and the maturing pan is pushed back into the housing 1.

If the closet is equipped with a pasteurizing slab 25, the maturing pan 17 can be heated so that its contents are pasteurized, which takes place at a temperature of $68^{\circ}$C. The pasteurization process is controlled by a timer 30 on the control cassette 14. After pasteurization, the maturing pan 17 can be emptied without risk on, for example, a lawn or a flower bed.

The primary container 4 can easily be detached from the sleeves in the side walls of the housing 1 and then lifted up out of the toilet. This is of great importance in order to permit effective cleaning of the container 4.

With the design described above, a closet has been created that has a basic version with manual operation of the stirring mechanism and without pasteurizing slab. This closet can then be equipped as needed with an easily attachable electric motor for driving the stirring mechanism and with the pasteurizing slab.

The invention is not limited to the embodiment illustrated here, but can be varied within the framework of the following patent claims.

Patent claims

1.  Composting closet of the kind that consists of a housing (1), an openable lid (3) applied to the top of the housing (1), a primary container (4) intended to be charged with a suitably composed mass (8) for biodegradation of human excrement, separate means (15) for heating the primary container (4) and thereby imparting a temperature suitable for the purpose to the mass (8), rotatable stirring elements (9, 10) for intermittently setting the mass (8) in such motion that its aeration is promoted, a maturing pan (17) communicable with the primary container (4), and means for ventilating the said primary container and maturing pan, characterized in that the primary container (4) consists of a cradle carried in a shaft between the side walls of the housing (1), which cradle can be swung between a resting position (fig. 2) and an emptying position, whereby the container's (4) swing shaft coincides with the stirring elements' (10) rotation shaft (9), whose rotation is brought about manually or by means of a motor, and by the fact that the maturing pan (17) runs on slide rails (19) on the bottom of the housing (1) underneath the primary container (4), and by the fact that the bottom of the housing (1) is provided with a recess (24) underneath the maturing pan (17) between the slide rails (19) to receive a heating slab (25), which is so designed that the mass in the said pan (17) can be heated to such a temperature that the mass is pasteurized.

2.  Composting closet as set forth in claim 1, characterized in that the front side of the housing (1) is provided with an openable door (20), whose inside is provided with slide rails (23), which, when the door is fully open, constitute an extension of the slide rails (19) arranged on the bottom of the housing (1).

3.  Composting closet as set forth in claim 1 or 2, characterized in that a tipping arm (5) is hinged at one end in one side wall of the primary container (4) and interacts at its other end with a slide bushing (7) attached to the side wall of the housing (1) so that it can be locked in the said bushing (7), either in a position in which the primary

0107633

container (4) is in the resting position or in a position in which the container (4) is tipped for emptying.

4. Composting closet as set forth in any of the foregoing patent claims, characterized in that the maturing pan (17) is equipped with a sliding element (18) for interaction with the slide rails (19, 23).

*Fig. 1*

*Fig. 2*

Fig. 3

0107633

European Patent Office

**EUROPEAN SEARCH REPORT**

Application number

EP 83 85 0271

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | GB-A-1 489 974 (AB GUSTAVSBERGS) * Page 1, lines 50-65; figure 2 * | 1 | A 47 K 11/02 A 47 K 11/00 |
| | --- | | |
| A | FR-A-2 199 956 (AB GUSTAVSBERGS) * Page 3, lines 29-31; figure 1 * | 1 | |
| | --- | | |
| A | US-A-3 908 336 (P. FORSLUND) * Column 2, lines 4-10; figure 2A * | 1 | |
| | --- | | |
| A | US-A-4 112 523 (G. WILLIAMS) | | |
| | --- | | |
| A | US-A-2 154 259 (A. BEAVER) | | TECHNICAL FIELDS SEARCHED (Int. Cl. ³) |
| | ----- | | A 47 K C 05 J F 23 G E 03 D |

The present search report has been drawn up for all claims

| Place of search | Date of completion of the search | Examiner |
|---|---|---|
| THE HAGUE | 19-01-1984 | GOLDSMITH H. |